# EUROPEAN PATENT APPLICATION

(11) **EP 1 466 941 A2**
(43) Date of publication of application: **13.10.2004**
(21) Application number: 04251963.7
(22) Date of filing: 01.04.2004
(51) Int. Cl.: C08K 13/02

(54) **Thermal stabilizer compositions for halogen-containing vinyl polymers**

(30) Priority: 11.04.2003 US 462104 P
(71) Applicant: ROHM AND HAAS COMPANY, Philadelphia, Pennsylvania 19106-2399 (US)
(72) Inventor: Conroy, Gary Martin, Cincinnati Ohio 45248 (US); Norris, Gene Kelly, West Chester Ohio 45069 (US)
(74) Representative: Kent, Venetia Katherine

(57) **Abstract**

Synergistic stabilizer compositions are employed to stabilize halogen-containing vinyl polymers from, for example, degradation and discoloration. The stabilizer compositions comprise a dihydropyridine or polydihydropyridine, and at least one of an aminoalcohol of formula (3) 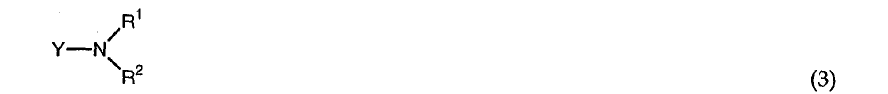 wherein Y is a substituted or unsubstituted C₁-C₃₆ alkyl, aryl, alkaryl, or aralkyl group, R¹ and R² are each independently hydrogen or a substituted or unsubstituted C₁-C₃₆ alkyl, aryl, alkaryl, or aralkyl group, with the proviso that Y, R¹, and R² are substituted so as to provide the aminoalcohol with two or more hydroxy groups; or a perchlorate salt.

## Description

This invention relates to stabilizer compositions for halogen-containing vinyl polymers, the stabilized halogen-containing vinyl polymer compositions and articles formed therefrom, and methods for stabilizing halogen-containing vinyl polymers.

Halogen-containing vinyl polymers, for example, poly(vinyl chloride) (PVC), copolymers of vinyl chloride and vinyl acetate, and poly(vinylidene chloride), are commonly used for fabricating a variety of articles such as pipes, window casings, siding, bottles, wall covering and packaging film. There have been many attempts to add stabilizers to halogen-containing vinyl polymers to improve the color hold in the polymer resins, particularly the color hold within the processing window, e.g., during the initial processing and during any subsequent re-processing. Most stabilizer compositions in present use contain metals such as tin, cadmium, and even lead. While these stabilizer compositions can be effective for minimizing discoloration during initial processing, as well as during any subsequent re-processing, there has been increasing interest in developing stabilizer compositions that are free of tin, cadmium, and/or lead for environmental, cost, and other reasons.

Such stabilizer compositions comprising various types of amines have been described. For example, U.S. Patent No. 3,288,744, discloses that tris(hydroxymethyl)aminomethane is useful for stabilizing halogen-containing vinyl polymers, but that other alkanolamines are unexpectedly poorer. U.S. Patent No. 3,652,619 discloses that metallo-organic complexes comprising the reaction products of certain alkanolamines and with zinc glutamate or zinc sulfate can provide thermal stabilization. Use of zinc complexes of amino acids is disclosed in U.S. Patent No. 4,425,280.

Use of alkanolamines in combination with other stabilizer components is disclosed, for example, in Japanese Publication No. 61-009451, which is directed to a stabilizer composition containing the perchlorate salt of mono-, di-, or triethanolamine. WO 02/48249 discloses stabilizer compositions containing an aminoalcohol, a perchlorate salt, and optionally other known stabilizers for use in flexible and rigid PVC formulations. DE 10118 179 A1 discloses stabilizer compositions containing an aminoalcohol, together with a perchlorate salt, certain types of enamines, or both. Exemplary enamines include alpha, beta-unsaturated beta-aminocarboxylic acids such as beta-crotonic acid esters and aminouracils. Dihydropyridines are not within the scope of the disclosure.

Nonetheless, there remains a need in the art for improved stabilizer compositions for halogen-containing vinyl polymers, particularly compositions that are free from cadmium, tin, and/or lead, and that provide improved resistance to discoloration during processing and/or use.

In a first aspect, there is provided a thermal stabilizer composition comprising a dihydropyridine, a polydihydropyridine, or a mixture thereof, wherein the dihydropyridine is of formula (1) 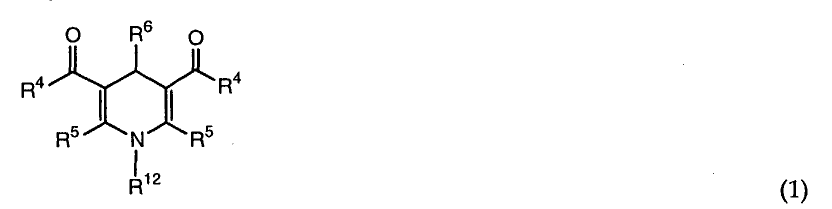 wherein each R⁵ is independently a C₁ to C₃₆ alkyl group, each R⁴ is independently hydrogen, -OR⁷, -NHR⁷, or -NR⁷R⁸ wherein each R⁷ and R⁸ are independently a substituted or unsubstituted C₁-C₂₀ alkyl or C₂-C₂₀ alkenyl group, each R⁶ is independently hydrogen, oxygen, halogen, or a substituted or unsubstituted C₁ to C₃₆ alkyl, alkenyl, aryl, alkaryl, or aralkyl group, and R¹² is a hydrogen, a substituted or unsubstituted C₁-C₂₀ alkyl, C₆-C₃₆ aryl, or C₆-C₃₆ alkaryl group, and wherein the polydihydropyridine is of formula (2): 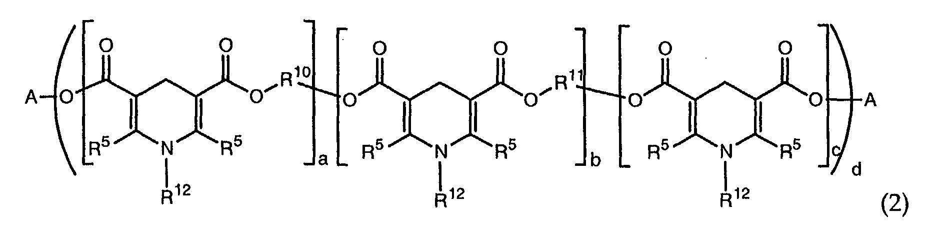 wherein A is a C₆₋₁₈ aryl or C₁₋₂₂ alkyl group that is unsubstituted or substituted with a C₁-C₁₈ alkoxy, C₁-C₁₈ alkylthio, hydroxy, acryloyloxy, methacryloyloxy, halogen, phenyl or naphthyl group, R⁵ is independently a C₁ to C₃₆ alkyl group, a and b are a number from 0 to 20, c is 0 or 1, and d is a number from 1 to 6, with the proviso that d(a+b+c)>1 and (a+b)>0, R¹⁰ and R¹¹ are each independently methylene, phenyl, or an alkylene group of the type (-CₚH₂ₚ-X-)ₜCₚH₂ₚ-, wherein p is a number from 2 to 18, t is a number from 0 to 10, and X is oxygen or sulfur, and R¹² is a hydrogen, a substituted or unsubstituted C₁-C₂₀ alkyl, C₆-C₃₆ aryl or C₆-C₃₆ alkaryl group; an amino alcohol of formula 3: 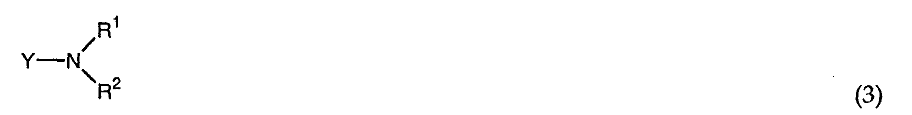 wherein Y is a substituted or unsubstituted C₁-C₃₆ alkyl, aryl, alkaryl, or aralkyl group; R¹ and R² are each independently hydrogen or a substituted or unsubstituted C₁-C₃₆ alkyl, aryl, alkaryl, or aralkyl group, and two of Y, R¹, or R² may join together to form a substituted or unsubstituted C₂-C₃₆ carbocyclic or heterocyclic group having oxygen or sulfur heteroatoms in the ring, and further wherein Y, R¹, and R² are substituted so as to provide the aminoalcohol with two or more hydroxy groups; and/or a perchlorate salt.

In a second aspect, there is provided a stabilized polymer composition comprising a halogen-containing vinyl polymer and the above-described stabilizer composition.

In another aspect, there is provided an article comprising the above-described stabilized polymer composition.

In another aspect, there is provided a method of stabilizing a polymer composition, comprising adding the above-described stabilizer composition to a halogen-containing vinyl polymer composition.

An effective stabilizer composition for halogen-containing vinyl polymers comprises a dihydropyridine or a polydihydropyridine, or both, in combination with an amino alcohol and/or a perchlorate salt, i.e., in combination with at least one amino alcohol, or at least one perchlorate salt, or both. These combinations provide unexpectedly improved thermal stability over prior art compositions.

Effective dihydropyridines that provide a synergistic effect in combination an aminoalcohol and/or a perchlorate salt are of formula (1) 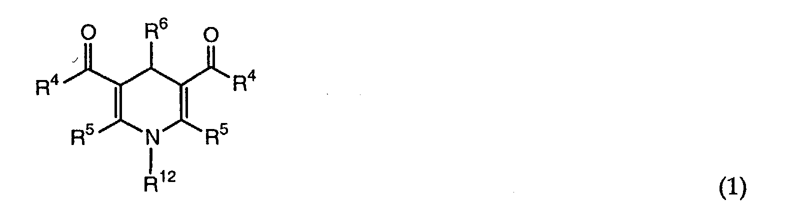 wherein each R⁵ is independently a C₁ to C₃₆ alkyl group, preferably a methyl or ethyl group. Each R⁴ is independently hydrogen, -OR⁷, -NHR⁷, or -NR⁷R⁸, wherein R⁷ and R⁸ are each independently a C₁-C₂₀ alkyl group, a C₁-C₂₀ alkoxy group, or a C₂-C₂₀ alkenyl group. Each of the the foregoing may be substituted or unsubstituted with groups that do not adversely affect use of the composition. A preferred substitutent is an alkoxy group. Preferably, R⁴ is -OR⁷, wherein R⁷ is a C₁-C₆ alkyl group. Each R⁶ is independently hydrogen, oxygen, halogen, or a C₁-C₃₆ alkyl, alkenyl, aryl, alkaryl, or aralkyl group, wherein the carbon containing groups may be substituted or unsubstituted with groups that do not adversely affect use of the composition. R¹² is a hydrogen, C₁-C₂₀ alkyl group, C₆-C₃₆ aryl group, or a C₂-C₂₀ alkenyl group. Each of the the foregoing may be substituted or unsubstituted with groups that do not adversely affect use of the composition. Preferably, C¹² is hydrogen. Suitable dihydropyridines include, for example, 3,5-bis(ethoxycarbonyl)-2,6-dimethyl-1,4-dihydropyridine.

Alternatively, or in addition to a dihydropyridine, a polydihydropyridine of formula (2) may be used 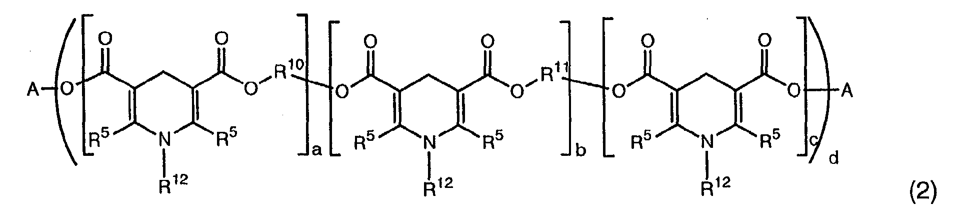 wherein A is a C₆₋₁₈ aryl, C₂₋₂₂ alkenyl, or C₁₋₂₂ alkyl, each of which may be unsubstituted or substituted with a C₁-C₁₈ alkoxy, a C₁-C₁₈ alkylthio, hydroxy, acryloyloxy, methacryloyloxy, halogen, phenyl or naphthyl. Each R⁵ is independently a C₁ to C₃₆ alkyl group, preferably a methyl or ethyl group. a and b are numbers from 0 to 20, c is 0 or 1, and d is a number from 1 to 6, with the proviso that d(a+b+c)>1 and (a+b)>0. R¹⁰ and R¹¹ are each independently methylene, phenyl, or an alkylene group of the type (-CₚH₂ₚ-X-)ₜCₚH₂ₚ-, wherein p is a number from 2 to 18, t is a number from 0 to 10, and X is oxygen or sulfur. R¹² is a hydrogen, C₁-C₂₀ alkyl group, a C₆-C₃₆ aryl group, or a C₂-C₂₀ alkenyl group. Each of the the foregoing may be substituted or unsubstituted with groups that do not adversely affect use of the composition. Preferably, R¹² is hydrogen. Suitable polydihydropyridines may be, for example, thiodiethylene-bis[5-methoxycarbonyl-2,6-di methyl-1,4-dihydropyridine-3-carboxylate].

Effective amounts of dihydropyridine and/or polydihydropyridine are 0.01 to 5 parts by weight per hundred parts by weight of resin (phr). Within this range, amounts of greater than 0.05 phr, preferably greater than 0.1 phr are preferred, and amounts of less than 2.0 phr, preferably less than 1.0 phr are preferred.

The dihydropyridines may be used in combination with an aminoalcohol having the structure shown in formula 3: 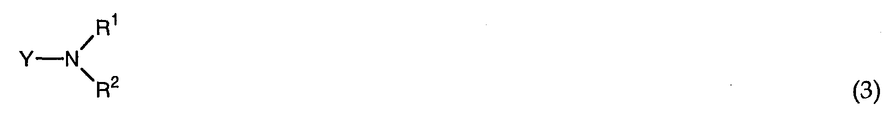 wherein Y is a substituted or unsubstituted C₁-C₃₆ alkyl, alkenyl, aryl, alkaryl, or aralkyl group. Preferably, Y is a C₁-C₁₂ alkyl or aryl group, and even more preferably Y is a C₁-C₄ alkyl group comprising at least one hydroxy group.

R¹ and R² in formula (3) are each independently hydrogen or a substituted or unsubstituted C₁-C₃₆ alkyl, alkenyl, aryl, alkaryl, or aralkyl group. Preferably, R¹ and R² are each independently hydrogen, or a C₁-C₁₂ alkyl or aryl group, and even more preferably hydrogen or a C₁-C₄ alkyl group comprising at least one hydroxy group. Two of Y, R¹, or R² may join together to form a substituted or unsubstituted C₂-C₃₆ carbocylic or heterocyclic group wherein the heteroatoms are oxygen or sulfur. It is not within the scope of the present invention that two of Y, R¹, or R² join together to form a substituted or unsubstituted heterocyclic group wherein the heteroatom(s) are nitrogen.

Suitable substituents for Y, R¹, and R² are those that do not adversely affect use of the thermal stabilizer composition, and include, for example, primary amines, carboxylic acids, carbonyl groups, halogens, C₂-C₁₈ heterocycles comprising oxygen or sulfur in the ring, or secondary amines, tertiary amines, carboxylic esters, amides, or ethers substituted with alkyl, alkenyl, aryl, aralkyl or aryl groups, with the exception of heterocyclic rings containing only nitrogen and carbon as ring-forming atoms.

In an important feature, Y, R¹, and R² are substituted so as to provide the aminoalcohol with two or more hydroxy groups. The two or more hydroxy groups may be present on one of Y, R¹, and R², or any combination of Y, R¹, and R². Suitable aminoalcohols within the scope of formula (3) include, for example, tris(2-hydroxyethyl)amine, tris(2-hydroxy-1-propyl)amine, bis(2-hydroxyethyl)-2-hydroxy-1-propylamine, N-(*n*-butyl)-N,N-bis(2-hydroxyethyl)amine, N,N-bis(*n*-butyl)-N-(2-hydroxyethyl)amine, N-(3-n-butyloxy-2-hydroxy-1-propyl)-N,N-bis(2-hydroxyethyl)amine, and N-(1,3-dihydroxy-2-hydroxymethyl-2-propyl)-N,N-bis(2-hydroxyethyl)amine, and the like. Mixtures of aminoalcohols may be used. Preferred aminoalcohols within the scope of formula (3) include, for example, triethanolamine, tris(hydroxymethyl)aminomethane, N-methyl glucamine, N,N'-bis (2-hydroxyethyl)ethylene diamine , and combinations comprising one or more of the foregoing aminoalcohols.

The aminoalcohols preferably used in amounts of 0.1 to 3 phr. Lesser amounts tend to be ineffective, and greater amounts may result in higher levels of long- term discoloration. Within this range, amounts of less than 1.5 phr, and preferably less than 1.0 phr, are preferred.

Alternatively, or in addition to the aminoalcohol of Formula (3), the stabilizer composition comprises a perchlorate salt. Suitable perchlorate salts include, for example, those of formula M(ClO₄)ₙ, wherein M is Li, Na, K, Mg, Ca, Sr, Zn, Al, La or Ce, and n is 1, 2 or 3, depending on the valence of M. The perchlorate salts may be complexed with a wide variety of alcohols, for example polyols, cyclodextrins, ether alcohols, ester alcohols, polyol partial esters, and mixtures comprising one or more of the foregoing alcohols. Dimers, trimers, oligomers, and polymers, such as di-, tri-, tetra- and poly-glycols, and di-, tri- and tetra-pentaerythritol or polyvinyl alcohol in various degrees of polymerization may also be used. Glycerol monoethers and glycerol monothioethers are preferred as polyol partial ethers. The perchlorate salts can be introduced in various known forms, for example in the form of a salt or an aqueous solution applied to a substrate, such as PVC, calcium silicate, zeolites, or hydrotalcites. The perchlorates may also be introduced as zeolite or hydrotalcite salts, formed for example, by ion exchange with the corresponding zeolite or hydrotalcite metal salts. The perchlorates can be used in an amount of, for example, 0.001 to 5 phr, preferably at least 0.01 phr. The perchlorates are preferably used in amounts less than 3, preferably less than 2 phr.

Optionally, the composition may include additional co-stabilizers, such as, for example, epoxy compounds, polyols, sterically hindered amines, phosphites, mercaptocarboxylic esters, hydrotalcites, zeolites, dawsonites, organic zinc compounds, and the like, and mixtures comprising one or more of the foregoing co-stabilizers. Suitable epoxy compounds include, for example, epoxidized oils such as soybean oil, lard oil, olive oil, linseed oil, peanut oil, tung oil, cottonseed oil, and mixtures comprising one or more of the foregoing epoxy compounds. Other suitable epoxy compounds include, for example, epichlorohydrin/bis-phenol A resins, butoxypropylene oxide, glycidyl epoxystearate, epoxidized α-olefins, epoxidized glycidyl soyate, and epoxidized butyl toluate; the glycidyl esters of organic carboxylic acids, the glycidyl ethers of resorcinol, hydroquinone, 1,5-dihydroxynaphthalene, glycerine, pentaerythritol, and sorbitol; allyl glycidyl ether, butyl glycidyl ether, cyclohexane oxide, 4-(2,3-epoxypropoxy)acetophenone, mesityl oxide epoxide, 2-ethyl-3-propyl glycidamine, and mixtures comprising one or more of the foregoing epoxy compounds. The epoxy may be present in amounts of up to 30 phr.

Suitable polyols include, for example, pentaerythritol, dipentaerythritol, tripentaerythritol, bistrimethylolpropane, trimethylolpropane, inosite, polyvinyl alcohol, sorbitol, mannitol, lactose, tris(hydroxyethyl)isocyanurate, tetramethylolcyclohexanol, tetramethylolcyclopyranol, glycerol, diglycerol, polyglycerol, or mixtures comprising at least one of the foregoing. Preferred polyols include, for example, sorbitol and trimethylolpropane. The polyols can be used in an amount of, for example, 0.01 to 20 phr, advantageously at least about 0.1 phr or less than 10 phr.

Useful sterically hindered amines include, for example, monomeric, oligomeric, or polymeric 2,2,6,6-tetramethylpiperidine compounds. The nitrogen of the piperidine moiety may be substituted by, for example, hydrogen, C₁-C₁₂ alkyl, C₃-C₈ alkenyl, or C₇-C₁₂ aralkyl. The C-4 carbon of the piperidine moiety may be substituted by, for example, hydrogen or oxygen or nitrogen-containing groups. Suitable 2,2,6,6-tetramethylpiperidine compounds include, for example, 4-hydroxy-2,2,6,6-tetramethylpiperidine, 1-benzyl-4-hydroxy-2,2,6,6-tetramethylpiperidine, 4-stearoyloxy-2,2,6,6-tetramethylpiperidine, 1,2,2,6,6-pentamethylpiperidin-4-yl-beta-(3,5-di-tert-butyl-4-hydroxyphenyl) propionate, di(2,2,6,6-tetramethylpiperidin-4-yl) succinate, 1-acetyl-2,2,6,6-tetramethylpiperidin-4-yl acetate, trimellitic acid tri(2,2,6,6-tetramethylpiperidin-4-yl) ester, and the like. The piperidines can be used in an amount of, for example 0.01 to 1 phr, advantageously at least about 0.1 phr or less than 0.5 phr.

Suitable phosphites include, for example, trialkylphosphites such as trioctyl phosphite, tridecyl phosphite, tridodecyl phosphite, tri(tetradecyl) phosphite, tricyclohexyl phosphite, tristearyl phosphite, distearyl-pentaerythritol diphosphite, or trioleyl phosphite; triaryl phosphites such as triphenyl phosphite, tricresyl phosphite, or tris-p-nonylphenyl phosphite; alkyldiaryl phosphites such as phenyldidecyl phosphite or (2,4-di-tert-butylphenyl)didodecyl phosphite; dialkylaryl phosphites; thiophosphites such as trithiohexyl phosphite, trithiooctyl phosphite, trithiolauryl phosphite, or trithiobenzyl phosphite; or mixtures comprising any one or more of the foregoing phosphites. The phosphites can be used in an amount of, for example, 0.01 to 10, advantageously 0.05 to 5, and especially 0.1 to 3 phr.

Suitable mercaptocarboxylic acid esters include, for example, esters of thioglycolic acid, thiomalic acid, mercaptopropionic acid, mercaptobenzoic acids, or thiolactic acid. Mercaptocarboxylic esters can be used in an amount of, for example, 0.01 to 10, advantageously 0.05 to 5, and especially 0.1 to 3 phr.

Suitable hydrotalcites include, for example, those having the formula Al₂O₃ 6MgO CO₂ 12H₂O, Mg_{4,5} Al₂(OH)₁₃ CO₃ 5H₂O, 4MgO Al₂O₃ CO₂ 9H₂O, 4MgO Al₂O₃CO₂ 6H₂O, ZnO 3MgO Al₂O₃ CO₂8-9H₂O, or ZnO 3MgO Al₂O₃ CO₂ 5-6H₂O. Suitable zeolites (alkali and alkaline earth aluminosilicates) include, for example, zeolite A, sodalite, zeolite Y, zeolite X, zeolite P, zeolites MAP, zeolites K-F, potassium offretite, zeolite T, and the like, and mixtures comprising at least one of the foregoing zeolites. Hydrotalcites and/or zeolites can be used in an amount of, for example, 0.1 to 20 phr, advantageously at least 0.1 phr. The hydrotalcite and/or zeolites may also be used in an amount of less than 10 phr, or less than 5 phr.

Suitable organozinc compounds have a Zn-O bond, and include, for example, zinc enolates, such as the enolates of acetylacetone, benzoylacetone, dibenzoylmethane, acetoacetates, benzoyl acetates and/or or zinc carboxylates, such as the zinc salts of aliphatic saturated C₂-C₂₂ carboxylates, aliphatic unsaturated C₃-C₂₂ carboxylates, aliphatic C₂-C₂₂ carboxylates that are substituted by at least one hydroxyl group or the chain of which is interrupted at least by one oxygen atom (oxa acids), C₅-C₂₂cyclic and bicyclic carboxylates, or phenylcarboxylates that are unsubstituted or substituted by at least one hydroxyl group and/or C₁-C₁₆ alkyl-substituted. Preferred zinc carboxylates include, for example, the zinc salts of acetic acid, propionic acid, hexanoic acid, 2-ethylhexanoic acid, decanoic acid, dodecanoic acid, tridecanoic acid, palmitic acid, lauric acid, stearic acid, 9,10-dihydroxystearic acid, oleic acid, 3,6,9-trioxadecanoic acid, benzoic acid, p-tert-butylbenzoic acid, 3,5-di-tert-butyl-4-hydroxybenzoic acid, salicylic acid, p-tert-octylsalicylic acid, oxalic acid, malonic acid, succinic acid, glutaric acid, adipic acid, lactic acid, maleic acid, tartaric acid, cinnamic acid, glycolic acid, phthalic acid, terephthalic acid, hydroxyphthalic acid, or a mixture comprising at least one of the foregoing acids. Preference is given to zinc carboxylates of a carboxylic acid having from 7 to 25 carbon atoms. In addition, inorganic zinc compounds, such as zinc oxide, zinc hydroxide, zinc sulfide or zinc carbonate, can also be used. The zinc compounds can be used in amounts of, for example, from 0.001 to 10, advantageously from 0.01 to 5, preferably from 0.01 to 3 phr.

As used herein, the term halogen-containing vinyl polymer means a halogen-containing polymer in which the halogens are attached directly to a carbon atom. Suitable halogen-containing polymers include, for example, chlorinated polyethylene having about 14 to about 75%, e.g., about 27%, chlorine by weight, chlorinated natural and synthetic rubber, rubber hydrochloride, chlorinated polystyrene, chlorinated poly(vinylidene chloride), chlorinated poly(vinyl chloride), poly(vinyl bromide), poly(vinyl fluoride), other vinyl chloride polymers, and mixtures comprising one or more of the foregoing polymers. The vinyl chloride polymers known as polyvinyl chloride (PVC) are made from vinyl chloride monomers alone or a mixture of monomers comprising, preferably, at least about 70% by weight of vinyl chloride, based on the total monomer weight. Suitable co-monomers include, for example, vinyl acetate, vinyl butyrate, vinyl benzoate, vinylidene chloride, trichloroethylene, 1-fluoro-2-chloroethylene, diethyl fumarate, diethyl maleate, methyl acrylate, 2-ethylhexyl acrylate, methyl alpha-chloroacrylate, methyl methacrylate, ethyl methacrylate, butyl methacrylate, styrene, vinyl ketones such as vinyl methyl ketone and vinyl phenyl ketone, acrylonitrile, chloroacrylonitrile, allylidene diacetate, chloroallylidene diacetate, and vinyl ethers such as vinyl ethyl ether, vinyl phenyl ether, the vinyl ether prepared by the reaction of one mole of acrolein with one mole of ethylene glycol divinyl ether, and mixtures comprising one or more of the foregoing co-monomers. Suitable halogen-containing vinyl copolymers include, for example, vinyl chloride-vinyl acetate, vinyl chloride-vinyl acetate (87:13), vinyl chloride-vinyl acetate-maleic anhydride (86:13:1), vinyl chloride-vinylidene chloride (95:5); vinyl chloride-diethyl fumarate (95:5), vinyl chloride 2-ethylhexyl acrylate (80:20), and mixtures comprising one or more of the foregoing copolymers.

A rigid halogen-containing vinyl polymer composition is one that does not contain a plasticizer. A semi-rigid halogen-containing vinyl polymer composition contains 1 to 25 parts of a plasticizer per 100 parts by weight of the halogen-containing vinyl polymer. A flexible halogen-containing vinyl polymer composition contains 25 to 100 parts of a plasticizer per 100 parts by weight of the halogen-containing vinyl polymer. Suitable plasticizers include, for example, alkyl esters of polyacids in which there are from 1 to 3 alkyl groups having from 8 to 12 carbon atoms. Suitable alkyl groups of the alkyl ester include, for example, n-octyl, 2-ethylhexyl, decyl, dodecyl, and mixtures comprising one or more of the foregoing alkyl groups. Suitable polyacids for the alkyl ester include, for example, phthalic acid, trimellitic acid, benzoic acid, adipic acid, sebacic acid, glutaric acid, phosphates, and the like. Polymeric plasticizers are also suitable.

Optionally, the halogen-containing polymer compositions may include other conventional additives such as, for example, antioxidants, lubricants, fillers, pigments, impact modifiers, processing aids, blowing agents, dyes, ultraviolet light absorbing agents, densifying agents, biocides, and mixtures comprising one or more of the foregoing additives. Suitable amounts of the foregoing additives are readily determined by one of ordinary skill in the art depending on the desired final properties and end use of the compositions. In general, each additive is present in an amount of 0.01 to 10 wt%, preferably 0.1 to 5 wt%, based on the total weight of the halogen-containing vinyl polymer.

Suitable antioxidants include, for example, phenolic antioxidants such as 2,6-di-t-butyl-p-cresol, butylated hydroxyanisole, 4,4'-thiobis(6-t-butyl-m-cresol), 4,4'-cyclohexylidenediphenol, 2,5-di-t-amyl hydroquinone, 4,4'-butylidene bis(6-t-buytl-m-cresol), hydroquinone monobenzyl ether, 2,2'-methylene-bis(4-methyl-6-t-butyl phenol), 2-t-butyl-4-dodecyloxy phenol, p-amino phenol, N-lauryloxy-p-amino phenol, 4,4'-thiobis(3-methyl-6-t-butyl phenol), bis [o-(1,1,3,3-tetramethyl butyl)phenol] sulfide, 4-dodecyoxy-2-hydroxybenzophenone, n-dodecyl ester of 3-hydroxy-4-(phenyl carbonyl)phenoxyacetic acid, t-butyl phenol, and mixtures comprising one or more of the foregoing antioxidants.

Suitable lubricants include, for example, paraffin waxes, salts of fatty acids, low molecular weight polyethylene (i.e., polyethylene wax), fatty acid amides (i.e., laurimide and stearamide), bis amides (i.e., decamethylene, bisamide), fatty acid esters (e.g., butyl stearate, glyceryl stearate, linseed oil, palm oil, decyloleate, corn oil, cottonseed oil, and the like), and mixtures comprising one or more of the foregoing lubricants. Suitable fillers include, for example, calcined clays, calcium carbonate, talcs, and mixtures comprising one or more of the foregoing fillers. Suitable pigments include, for example, titanium dioxide, carbon black, iron oxide, and mixtures comprising one or more of the foregoing pigments.

In general, the above-described thermal stabilizer compositions are provided as a one-part mixture formulated so as to provide one or more dihydropyridines or polydihydropyridines of formulas (1 or 2), and at least one of one or more aminoalcohols of formula (3), or one or more perchlorate salts in amounts effective to result in a synergistic improvement in thermal stability. As other optional additives may also be present in the one-part mixture, the particular amount of each component may vary from 0.1 to 99.9% percent by weight, preferably 1.0 to 99.0% by weight based on the total weight of the one-part mixture. Particular amounts effective to result a synergistic improvement in thermal stability are readily determined by one of ordinary skill in the art.

The halogen-containing vinyl polymer compositions may be prepared by blending under low or high shear. Likewise, the thermal stabilizer compositions may be incorporated in the halogen-containing vinyl polymer composition by mixing the components thereof and the polymer in an appropriate mill or mixer or by another method that provides uniform distribution of the stabilizer throughout the polymer. Depending on the compatibility and physical state (i.e., liquid or solid) the components of the blend may require heating to form a uniform stabilized polymer composition having the desired performance characteristics.

The stabilized halogen-containing vinyl polymer composition can be used to form a variety of rigid articles such as, for example, house siding, window profiles, and pipe using a variety of techniques to shape the articles such as, for example, molding, extrusion, and injection molding.

In one embodiment, a synergistic combination comprising a dihydropyridine and/or a polydihydropyridine and an aminoalcohol of Formula (3) provides improved early color, i.e., prolonged whiteness during initial processing, which is of particular importance in the manufacture of pipes from halogen-containing vinyl polymers. Alternatively, a synergistic combination comprising dihydropyridine and the aminoalcohol can provide improved long-term color stability, preferably together with the improved early color.

In another embodiment, stabilizer compositions comprising a dihydropyridine and/or a polydihydropyridine, an aminoalcohol of Formula (3), and a perchlorate salt function synergistically to provide improved early color, i.e., prolonged whiteness during initial processing, which is of particular importance in the manufacture of pipes from halogen-containing vinyl polymers. Alternatively, the synergistic combination of a dihydropyridine and/or a polydihydropyridine, an aminoalcohol of Formula (3) and a perchlorate salt can provide improved long-term color stability, preferably together with the improved early color.

The invention is further illustrated by the following examples, wherein PVC compositions for thermal stability testing were prepared by mixing, under high shear, 100 parts by weight of PVC resin, pigment (0.2 phr), mold release agents (0.5-2 phr), co-stabilizer (1-10 phr epoxidized soybean oil), and lubricants (0.2 to 2.0 phr), together with the stabilizer compositions shown in the Tables. The mixed compositions were then heated in a two-roll mill at 390°F (199°C) and samples were removed at the indicated time intervals and formed into chips. Color change (as reflected by dE) and yellowness (YI) of each chip was measured using a Hunter Labs (L, a, b) colorimeter.

Examples 1-7 show the synergistic effects obtained using a combination of triethanolamine, 3,5-bis(ethoxycarbonyl)-2,6-dimethyl-1,4-dihydropyridine (DHP) and perchlorate salt on silica (MARK 6045, available from Crompton).

**Table 1**

| **Component** | **Example No.** | | | | | | |
|---|---|---|---|---|---|---|---|
| | **1*** | **2*** | **3*** | **4** | **5*** | **6** | **7** |
| Mark 6045 | 0.3 | 0.3 | 0.3 | 0.3 | - | 0.1 | 0.025 |
| DHP | - | 0.5 | - | 0.5 | 0.5 | 0.5 | 0.5 |
| Triethanolamine | - | - | 0.5 | 0.5 | 0.5 | 0.5 | 0.5 |

| **dE at minute** | | | | | | | |
|---|---|---|---|---|---|---|---|
| 1 | 26.6 | 13.3 | 13.9 | 12.0 | 12.4 | 15.8 | 15 |
| 2 | 34.3 | *16.3 | 17.6 | 11.9 | 14.5 | 14.9 | 15.2 |
| 3 | 37.0 | 18.4 | 23.8 | 12.4 | 20.2 | 17.2 | 18.1 |
| 4 | 39.5 | 20.3 | 30.4 | 13.5 | 25.4 | 19.7 | 22.3 |
| 5 | 40.1 | 22.5 | 37.4 | 17.2 | 28.5 | 24.1 | 25.7 |
| 6 | 42.5 | 26.7 | 43.4 | 22.5 | 33.6 | 27.4 | 29.3 |
| 7 | | 32.8 | | 21.7 | 37.2 | 30.4 | 34.1 |
| 8 | | 38.9 | | 24.0 | | 35.2 | 38.6 |
| 9 | | | | 25.3 | | 36.5 | 41.7 |

| | | | | | | | |
|---|---|---|---|---|---|---|---|
| *Comparative | | | | | | | |

The above data show that a combination of a metal perchlorate, an aminoalcohol and DHP work synergistically to provide both improved short term and long term color stability. Improved short term color stability is particularly noticeable, as the time to a dE of about 13 is increased from 1 minute (Examples 2, 3, and 5) to 4 minutes (Example 4). Examples 6 and 7 show an enhanced effect with use of increasing amounts of perchlorate.

Examples 8-11 provide a comparison between the use of 3,5-bis(ethoxycarbonyl)-2,6-dimethyl-1,4-dihydropyridine (DHP), 1,4-butanediol bis(3-aminocrotonate), phenylindole, and 6-amino-1,3-dimethylaminouracil in combination with sodium perchlorate on silica and triethanolamine. Amounts of DHP, 1,4-butanediol bis(3-aminocrotonate), phenylindole, and 6-amino 1,3-dimethylaminouracil were adjusted to provide equimolar compound in each sample.

**Table 2:**

| **Component** | **Example No.** | | | |
|---|---|---|---|---|
| | **8*** | **9** | **10*** | **11*** |
| Triethanolamine | 0.2 | 0.2 | 0.2 | -0.2 |
| MARK 6045 | 0.5 | 0.5 | 0.5 | -0.5 |
| Crotonate | 0.4 | - | - | - |
| DHP | - | 0.4 | - | - |
| Phenylindole | - | - | 0.3 | - |
| Uracil | - | - | - | 0.24 |

| **dE at minute** | | | | |
|---|---|---|---|---|
| 1 | 14.5 | 11.8 | 15.0 | 13.5 |
| 2 | 18.1 | 12.7 | 19.0 | 14.7 |
| 3 | 21.6 | 13.8 | 22.3 | 16.0 |
| 4 | 23.8 | 16.0 | 26.9 | 20.1 |
| 5 | 26.3 | 19.2 | 32.2 | 238 |
| 6 | 30.4 | 24.3 | 36.5 | 30.3 |
| 7 | 33.4 | 30.8 | 41.7 | 36.7 |
| 8 | 36.5 | 38.7 | 49.3 | 45.4 |

| | | | | |
|---|---|---|---|---|
| *Comparative | | | | |

The above data show that a combination of an aminoalcohol with DHP (Example 9) provides unexpectedly superior results compared to other enamines (Examples 8, 10, and 11). In a particularly advantageous feature, early color hold is improved with use of DHP.

Examples 12-16 illustrate the improved result obtained with use of triethanolamine compared to 1,3,5-tris(2-hydroxyethyl)cyanuric acid (THEIC) in combination with DHP.

**Table 3.**

| **Component** | **Example No.** | | | | |
|---|---|---|---|---|---|
| | **12** | **13*** | **14*** | **15*** | **16*** |
| Dihydropyridine | 0.5 | 0.5 | - | - | 0.5 |
| Triethanolamine | 0.5 | - | 0.5 | - | - |
| THEIC | - | 0.88 | - | 0.88 | - |
| **dE at minute** | - | - | - | - | - |
| 1 | 14.3 | 14.2 | 25.3 | 19.7 | 17.4 |
| 2 | 17.5 | 19.3 | 38.5 | 41.4 | 27.5 |
| 3 | 23.6 | 27.0 | 55.7 | 56.0 | 35.5 |
| 4 | 29.2 | 32.6 | 68.3 | 61.5 | 41.2 |
| 5 | 36.3 | 38.2 | - | 68.5 | 43.2 |
| 6 | 41.2 | 43.6 | - | - | 45.9 |
| 7 | 46.6 | 47.8 | - | - | 63.3 |
| 8 | 54.1 | 66.2 | - | - | - |

| | | | | | |
|---|---|---|---|---|---|
| * Comparative | | | | | |

The above data show that the combination of DHP and triethanolamine (Example 12) shows improved results over THEIC and triethanolamine (Example 13).

Examples 17 - 24 show a comparison between use of 3,4-bis(ethoxycarbonyl)-2,6-dimethyl-1,4-dihydropyridine (DHP), 1,4-butanediol bis(3-aminocrotonate), phenylindole, and 6-amino-1,3-dimethylaminouracil in combination with triethanolamine. Amounts of each enamine were selected so as to provide equimolar enamine to the samples.

**Table 4:**

| **Component** | **Example No.** | | | | | | | |
|---|---|---|---|---|---|---|---|---|
| | **17** | **18*** | **19*** | **20*** | **21*** | **22*** | **23** | **24*** |
| Triethanolamine | 0.5 | - | 0.5 | - | 0.5 | - | 0.5 | - |
| Dihydropyridine | 0.5 | 0.5 | - | - | | - | - | - |
| Crotonate | - | - | 0.5 | 0.5 | | - | - | - |
| Phenylindole | - | - | - | - | 0.39 | 0.39 | - | - |
| Uracil | - | - | - | - | - | - | 0.31 | 0.31 |

| **dE at minute** | | | | | | | | |
|---|---|---|---|---|---|---|---|---|
| 1 | 14.9 | 18.7 | 17.4 | 21.5 | 18.3 | 23.5 | 15.8 | 16.4 |
| 2 | 19.5 | 31.3 | 28.7 | 38.6 | 32.2 | 44.4 | 22.6 | 20.4 |
| 3 | 27.4 | 39.5 | 37.5 | 47.3 | 40.7 | 53.4 | 29.1 | 27.7 |
| 4 | 31.3 | 43.0 | 45.3 | 55.3 | 49.6 | | 41.8 | 36.4 |
| 5 | 39.1 | 44.4 | 55.6 | | 56.2 | | 49.8 | 71.5 |
| 6 | 43.4 | 57.4 | | | | | | |

| | | | | | | | | |
|---|---|---|---|---|---|---|---|---|
| *Control example | | | | | | | | |

The above data show that a combination of triethanolamine with DHP provides unexpectedly improved results over the types of enamines disclosed, for example, in DE 10118 179A. In particular, DHP provides synergistic early and mid-term color stability, as a value of 19.5 is obtained at 2 minutes compared to greater than 22.6 or even greater than 31 in the other samples. At 4 minutes, a color value of 31.3 is obtained for the sample with DHP, while color values of 36 or even higher are obtained for the other samples.

Examples 25-29 illustrate the unexpectedly improved results obtained with use of a perchlorate salt in combination with a DHP.

**Table 5.**

| **Component** | **Example No.** | | | | |
|---|---|---|---|---|---|
| | **25** | **26*** | **27*** | **28*** | **29** |
| Dihydropyridine | 0.5 | 0.5 | - | - | 0.5 |
| Triethanolamine | 0.5 | - | 0.5 | - | - |
| THEIC | - | 0.88 | - | 0.88 | - |
| Perchlorate | 0.3 | 0.3 | 0.3 | 0.3 | 0.3 |

| **dE at minute** | | | | | |
|---|---|---|---|---|---|
| 1 | 15.5 | 15.0 | 16.0 | 18.7 | 16.4 |
| 2 | 16.1 | 16.0 | 19.4 | 28.8 | 21.6 |
| 3 | 17.0 | 19.7 | 27.3 | 35.5 | 25. |
| 4 | 19.4 | 23.9 | 36.7 | 40.8 | 26.3 |
| 5 | 24.3 | 29.5 | 48.4 | 45.7 | 28.7 |
| 6 | 30.3 | 33.1 | - | 48.2 | 39.9 |
| 7 | 34.5 | 37.3 | - | 56.1 | 53.9 |
| 8 | 39.3 | 49.6 | - | - | - |

| | | | | | |
|---|---|---|---|---|---|
| *Comparative | | | | | |

The above examples show that the best results are obtained with a combination of dihydropyridine, an aminoalcohol in accordance with the invention, and perchlorate (Example 25). These results are furthermore unexpectedly improved over those obtained using THEIC (Example 26). This improvement is also seen when DHP is used with a perchlorate alone (see Example 28 and Example 29).

## Claims

1. A stabilizer composition comprising
a dihydropyridine, a polydihydropyridine, or a mixture thereof, wherein the dihydropyridine is of formula (1) 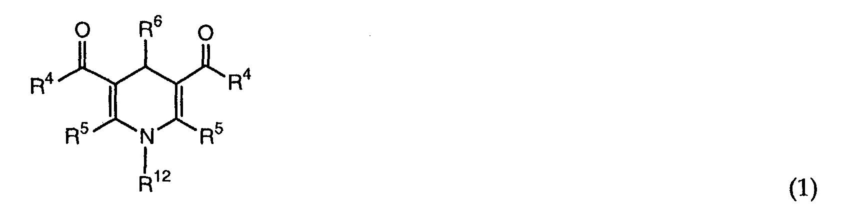 wherein each R⁵ is independently a C₁ to C₃₆ alkyl group, each R⁴ is independently hydrogen, -OR⁷, -NHR⁷, or -NR⁷R⁸ each R⁷ and R⁸ is independently a substituted or unsubstituted C₁-C₂₀ alkyl or C₂-C₂₀ alkenyl group, each R⁶ is independently hydrogen, oxygen, halogen, or a substituted or unsubstituted C₁ to C₃₆ alkyl, alkenyl, aryl, alkaryl, or aralkyl group, and R¹² is a hydrogen, a substituted or unsubstituted C₁-C₂₀ alkyl, C₆-C₃₆ aryl, or C₆-C₃₆ alkaryl group, and wherein the polydihydropyridine is of formula (2): 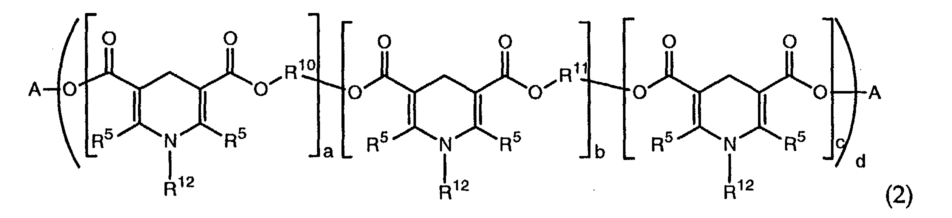 wherein A is a C₆₋₁₈ aryl or C₁₋₂₂ alkyl group that is unsubstituted or substituted with a C₁-C₁₈ alkoxy, C₁-C₁₈ alkylthio, hydroxy, acryloyloxy, methacryloyloxy, halogen, phenyl or naphthyl group, R⁵ is independently a C₁ to C₃₆ alkyl group, a and b are a number from 0 to 20, c is 0 or 1, and d is a number from 1 to 6, with the proviso that d(a+b+c)>1 and (a+b)>0, R¹⁰ and R¹¹ are each independently methylene, phenyl, or an alkylene group of the type (-CₚH₂ₚ-X-)ₜCₚH₂ₚ-, wherein p is a number from 2 to 18, t is a number from 0 to 10, and X is oxygen or sulfur, and R¹² is a hydrogen, a substituted or unsubstituted C₁-C₂₀ alkyl, C₆-C₃₆ aryl or C₆-C₃₆ alkaryl group;
an amino alcohol of formula 3: 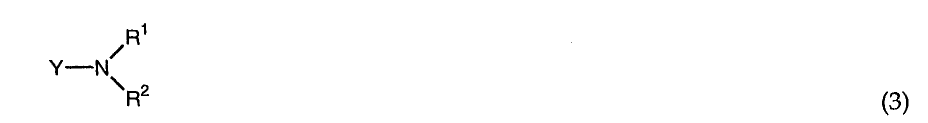 wherein Y is a substituted or unsubstituted C₁-C₃₆ alkyl, C₆-C₃₆ aryl, C₇-C₃₆ alkaryl, or C₇-C₃₆ aralkyl group; R¹ and R² are each independently hydrogen or a substituted or unsubstituted C₁-C₃₆ alkyl, C₆-C₃₆ aryl, C₇-C₃₆ alkaryl, or C₇-C₃₆ aralkyl group, and two of Y, R¹, or R² may join together to form a substituted or unsubstituted C₂-C₃₆ carbocyclic or heterocyclic group having oxygen or sulfur heteroatoms in the ring, and further wherein Y, R¹, and R² are substituted so as to provide the aminoalcohol with two or more hydroxy groups; and/or
a perchlorate salt.

2. The stabilizer composition of claim 1, wherein the composition comprises an aminoalcohol and the aminoalcohol is tris(hydroxymethylamino)methane, tris(hydroxyethylamino)ethane, triethanolamine, N,N'-bis(2-hydroxyethyl)ethylenediamine, glucamine, or a mixture comprising at least one of the foregoing aminoalcohols.

3. The stabilizer composition of claim 1, wherein the composition comprises a perchlorate salt and the perchlorate salt has the formula M(ClO₄)ₙ, wherein M is Li, Na, K, Mg, Ca, Sr, Zn, Al, La or Ce, and n is 1, 2 or 3, depending on the valence of M.

4. The stabilizer composition of claim 1, 2, or 3, wherein each R⁴ is -OR⁷, and R⁷ is a C₁-C₆ alkyl group.

5. The stabilizer composition of claim 1, 2, or 3 wherein the composition comprises an aminoalcohol and a perchlorate salt, and wherein aminoalcohol is tris(hydroxymethylamino)methane or triethanolamine, each R⁴ is -OR⁷ wherein R⁷ is a methyl or ethyl group, each R⁵ is the same, and the perchlorate salt is sodium perchlorate.

6. A method of stabilizing a composition comprising adding to a halogen-containing vinyl polymer composition the stabilizer composition of claim 1, 2, or 3.

7. A polymeric composition, comprising
a halogen-containing vinyl polymer,
a dihydropyridine, a polydihydropyridine, or a mixture thereof, wherein the dihydropyridine is of formula (1) 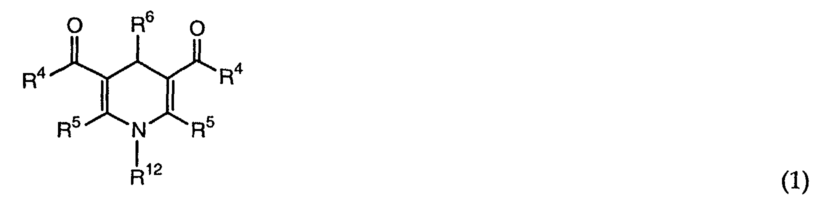 wherein each R⁵ is independently a C₁ to C₃₆ alkyl group, each R⁴ is independently hydrogen, -OR⁷, -NHR⁷, or -NR⁷R⁸ each R⁷and R⁸ is independently a substituted or unsubstituted C₁-C₂₀ alkyl or C₂-C₂₀ alkenyl group, each R⁶ is independently hydrogen, oxygen, halogen, or a substituted or unsubstituted C₁ to C₃₆ alkyl, alkenyl, aryl, alkaryl, or aralkyl group, and R¹² is a hydrogen, a substituted or unsubstituted C₁-C₂₀ alkyl, C₆-C₃₆ aryl, or C₆-C₃₆ alkaryl group, and wherein the polydihydropyridine is of formula (2): 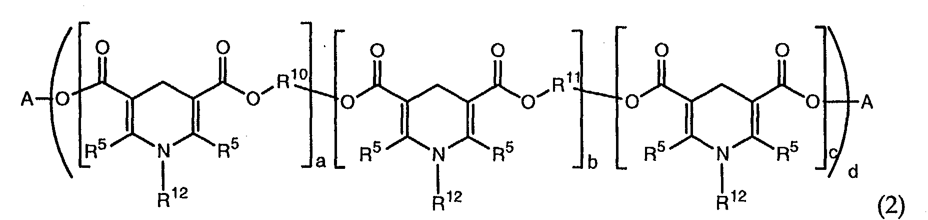 wherein A is a C₆₋₁₈ aryl or C₁₋₂₂ alkyl group that is unsubstituted or substituted with a C₁-C₁₈ alkoxy, C₁-C₁₈ alkylthio, hydroxy, acryloyloxy, methacryloyloxy, halogen, phenyl or naphthyl group, each R⁵ is independently a C₁ to C₃₆ alkyl group, a and b are a number from 0 to 20, c is 0 or 1, and d is a number from 1 to 6, with the proviso that d(a+b+c)>1 and (a+b)>0, R¹⁰ and R¹¹ are each independently methylene, phenyl, or an alkylene group of the type (-CₚH₂ₚ-X-)ₜCₚH₂ₚ- wherein p is a number from 2 to 18, t is a number from 0 to 10, and X is oxygen or sulfur, and R¹² is a hydrogen, a substituted or unsubstituted C₁-C₂₀ alkyl, C₆-C₃₆ aryl or C₆-C₃₆ alkaryl group;
an amino alcohol of formula 3: 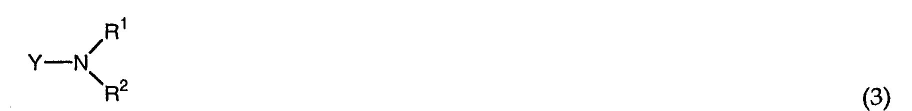 wherein Y is a substituted or unsubstituted C₁-C₃₆ alkyl, C₆-C₃₆ aryl, C₇-C₃₆ alkaryl, or C₇-C₃₆ aralkyl group; R¹ and R² are each independently hydrogen or a substituted or unsubstituted C₁-C₃₆ alkyl, C₆-C₃₆ aryl, C₇-C₃₆ alkaryl, or C₇-C₃₆ aralkyl group, and two of Y, R¹, or R² may join together to form a substituted or unsubstituted C₂-C₃₆ carbocyclic or heterocyclic group having oxygen or sulfur heteroatoms in the ring, and further wherein Y, R¹, and R² are substituted so as to provide the aminoalcohol with two or more hydroxy groups; and/or
a perchlorate salt.

8. The stabilized copolymer composition of claim 7, wherein the composition comprises an aminoalcohol and the aminoalcohol is tris(hydroxymethylamino)methane, tris(hydroxyethylamino)ethane, triethanolamine, N,N'-bis(2-hydroxyethyl)ethylenediamine, glucamine, or a mixture comprising at least one of the foregoing aminoalcohols.

9. The stabilized polymer composition of claim 7, comprising 0.01 to 5 phr of the dihydropyridine, 0.1 to 3 phr of the aminoalcohol, and 0.001 to 5 phr of the perchlorate salt.

10. An article comprising the stabilized polymer composition of claim 7, 8, or 9.
